# EUROPÄISCHE PATENTSCHRIFT

(11) **EP 1 386 408 B1**
(45) Veröffentlichungstag und Bekanntmachung des Hinweises auf die Patenterteilung: **23.11.2005**
(21) Anmeldenummer: 02737834.8
(22) Anmeldetag: 08.05.2002
(51) Int. Cl.: H04B 1/40

(54) **SENDEANORDNUNG, INSBESONDERE FÜR DEN MOBILFUNK, SOWIE VERWENDUNG EINER SENDEANORDNUNG**
EMISSION DEVICE, ESPECIALLY FOR MOBILE TELEPHONY, AND USE OF ONE SUCH EMISSION DEVICE
DISPOSITIF D'EMISSION, EN PARTICULIER POUR LA TELEPHONIE MOBILE, ET UTILISATION D'UN TEL DISPOSITIF D'EMISSION

(30) Priorität: 08.05.2001 DE 10122196
(43) Veröffentlichungstag der Anmeldung: 04.02.2004
(73) Patentinhaber: Infineon Technologies AG, 81669 München (DE)
(72) Erfinder: GUNZELMANN, Bertram, 86163 Augsburg (DE); WENZEL, Dietmar, 81549 München (DE)
(74) Vertreter: Epping - Hermann - Fischer
(86) Internationale Anmeldenummer: PCT/DE2002/001673
(87) Internationale Veröffentlichungsnummer: WO 2002/091601

(56) Entgegenhaltungen:
- WO-A-99/10976
- GB-A- 2 350 755
- US-A- 6 011 785
- LUCENT TECHNOLOGIES: "W7020 BLUETOOTH RADIO MODULE" LUCENT PRODUCT NOTE, Dezember 1999 (1999-12), XP002207699

## Beschreibung

Die vorliegende Erfindung betrifft eine Sendeanordnung, insbesondere für den Mobilfunk, sowie die Verwendung einer Sendeanordnung.

Im Mobilfunk unterscheidet man üblicherweise zwischen Mobilstationen und Feststationen, wobei mehrere Mobilstationen gleichzeitig mit einer Fest- oder Basisstation kommunizieren können.

Entsprechend standardisierten Modulationsverfahren, wie GSM (Global System for Mobile Communication), EDGE, TIA-EIA136, UTRA FDD (UMTS, Universal Mobile Telecommunication Standard), UTRA TDD, IS-95 und so weiter, wird in Sendeeinrichtungen von Mobilstationen mittels Modulatoren eine Trägerfrequenz gemäß zu übertragender Daten, wie Sprach- oder Textdaten, moduliert. Üblicherweise umfassen derartige Modulatoren mehrere Funktionseinheiten, beispielsweise einen Basisbandteil und einen Hochfrequenzteil. Im Basisbandteil wird mittels digitaler Signalverarbeitung aus den zu übertragenden Daten ein standardkonformes, üblicherweise komplexwertiges Signal erzeugt. Dieses komplexwertige Signal wird im Hochfrequenzteil in eine hochfrequente Lage verschoben, beispielsweise in einer homodynen oder heterodynen Sendearchitektur, und als reellwertiges Signal nach einer geeigneten Leistungsverstärkung beispielsweise mittels einer Antenne über einen Funkkanal gesendet.

Aufgrund unterschiedlicher physikalischer Anforderungen an den Basisband- und den Hochfrequenzteil werden diese Funktionseinheiten meist in voneinander getrennten integrierten Schaltkreisen (Chips) mit unterschiedlichen Herstellungsprozessen realisiert. Dabei ist zwischen Basisband-Bauteil und Hochfrequenz-Bauteil eine geeignete Schnittstelle vorzusehen, welche derzeit üblicherweise als analoge Signalschnittstelle ausgebildet ist. Die Basisbandsignale werden dabei normalerweise an dieser Schnittstelle als komplexwertige Basisbandsignale bereitgestellt, zerlegt in einen Realteil und einen Imaginärteil, als sogenanntes IQ-Signal mit einer Inphase-Komponente und einer hierzu 90° phasenverschobenen Quadraturkomponente. I- und Q-Komponente werden dabei meistens jeweils als Differenzsignal übertragen, so daß wiederum je zwei Leitungen vorzusehen sind. Neben der folglich erforderlichen großen Anzahl von Leitungen an der Schnittstelle und demnach einer hohen Pin-Anzahl der beteiligten integrierten Schaltkreise, erfordert diese bekannte Signalübergabe sowohl auf der Hochfrequenz- als auch auf der Basisbandseite qualitativ hochwertige, analoge Signalverarbeitungskomponenten, wie beispielsweise Digital/Analog-Umsetzer und Verstärker.

Weiterhin müssen im Basisbandschaltungsteil üblicherweise besondere Signalverarbeitungsschritte im Hinblick auf den Hochfrequenzteil vorgenommen werden, um Unzulänglichkeiten, Nichtidealitäten oder Toleranzen im Hochfrequenzteil voraus zu kompensieren oder voraus zu korrigieren. Folglich ist eine Betrachtung, Analyse und Entwicklung des Basisbandteils unabhängig vom Hochfrequenzteil nicht mehr möglich. Aufgrund der fortschreitenden Entwicklung auf dem Gebiet der digitalen Signalverarbeitung und der Modulatorkonzepte steigt der Anteil der Verarbeitung im Basisband im Verhältnis zum Gesamt-Signalverarbeitungspfad immer mehr an, speziell im Hinblick auf das Zusammenwirken mit dem Hochfrequenzteil. Hierdurch ist eine unerwünschte, eingeschränkte Flexibilität von Basisbandbausteinen beziehungsweise Basisbandchips gegeben, da die Basisbandbausteine nur noch gemeinsam mit derjenigen Hochfrequenzbaugruppe einsetzbar sind, für die sie speziell entwickelt wurden.

In dem Dokument "W7020 Bluetooth* Radio Module", Lucent Product Note, Lucent Technologies, Dezember 1999 ist ein Funk-Sende-Empfänger für Bluetooth-Verbindungen angegeben.

Es ist daher Aufgabe der vorliegenden Erfindung, eine Sendeanordnung, insbesondere für den Mobilfunk, sowie die Verwendung einer derartigen Sendeanordnung anzugeben, welche eine hohe Flexibilität, das heißt vom Hochfrequenzteil unabhängige Basisbandverarbeitung ermöglicht sowie mit geringem Aufwand, insbesondere geringer Pinzahl, realisierbar ist.

Erfindungsgemäß wird die Aufgabe mit einer Sendeanordnung, insbesondere für den Mobilfunk, gelöst, aufweisend die Merkmale des Patentanspruchs 1.

Als zu sendende Nutzdaten sind dabei diejenigen Daten verstanden, mit denen im Hochfrequenzteil eine Trägerfrequenz moduliert und beispielsweise über eine Antenne gesendet wird.

Als Konfigurationsdaten sind diejenigen Daten verstanden, mit denen das Hochfrequenzbauteil konfigurierbar ist, beispielsweise die Modulationsart im Sender, Amplitude, Sendeleistungsverlauf, Sendefrequenz, Sendezeitpunkt, Sendedauer, Sendebetriebsart, Ein- und Ausschaltverhalten des Senders, das sogenannte Power Ramping, und so weiter.

Die beschriebene, digitale Schnittstelle zwischen Basisbandbauteil und Hochfrequenzbauteil bietet vorteilhafterweise eine vom Hochfrequenzteil unabhängige Basisbandverarbeitung. Im Basisbandbauteil sind keine analogen Schaltungskomponenten im Sendesignalpfad erforderlich, so daß eine hohe Integrationsdichte und insbesondere eine weitgehende Unabhängigkeit von Fertigungsstreuungen gewährleistet werden können. Auf eine analoge Schnittstelle zwischen Basisband- und Hochfrequenzteil kann völlig verzichtet werden. Über die beschriebene, digitale Schnittstelle können sowohl Modulationsdaten (Nutzdaten) als auch Konfigurationsdaten vom Basisband- and den Hochfrequenzteil übertragen werden. Weiterhin kann die beschriebene, digitale Schnittstelle mit einer geringen Anzahl von Leitungen sowie mit niedrigen Datenraten auskommen.

Im Basisbandbauteil können Signalverarbeitungsschritte auf Informationsbit-Ebene durchgeführt werden, beispielsweise die Bildung von Transportblöcken, Fehlerschutzcodierung, Adaption der Bitrate, Kanalcodierung wie beispielsweise Faltungs- und/oder Turbocodierung, Verschachtelung (Interleaving), Transportstrom-Multiplexbildung, Rahmen- und Paketsegmentierung und so weiter. Diejenigen Signalverarbeitungsschritte auf physikalischer Ebene, die der Schicht 1 im OSI-Schichtenmodell entsprechen, wie beispielsweise Impulsformung, Modulation, Vorauskorrektur und Kompensation, können mit der beschriebenen, digitalen Schnittstelle vollständig im Hochfrequenzbauteil und demnach unabhängig vom Basisbandbauteil ausgeführt werden.

Insgesamt ist die beschriebene Sendeanordnung besonders für den Einsatz in Mobilfunkstationen und dort zur Unterstützung der Mobilfunkstandards GSM, EDGE, TIA/EIA136, aber auch Mobilfunkstandards der dritten Generation wie UTRA FDD, UTRA TDD oder IS-95, geeignet.

Die ausschließlich digital aufgebaute Schnittstelle erlaubt ein deutlich vereinfachtes Schaltungslayout und Schaltungsdesign im Basisband- und Hochfrequenzbaustein. Zudem ergibt sich eine deutlich höhere Flexibilität dadurch, daß diejenigen digitalen Signalverarbeitungsschritte zur Kompensation und/oder Vorauskorrektur der Hochfrequenzsignale direkt in der Hochfrequenzbaugruppe, das heißt im Hochfrequenzbauteil durchgeführt werden können, so daß ein Basisbandbaustein je nach Anwendungsfall mit unterschiedlichen Hochfrequenzbausteinen gekoppelt werden kann.

Die ausschließlich digitale Realisierung des Basisbandbausteins ermöglicht den Einsatz von kostengünstigen Herstellungsprozessen mit geringem Aufwand, da keine analogen Schaltungskomponenten integriert werden müssen. Außerdem ist ein Anpassen an zukünftige Fertigungsprozesse mit höheren Integrationsdichten mit sehr geringem Aufwand möglich.

Das Basisbandbauteil und das Hochfrequenzbauteil können voneinander getrennte, integrierte Schaltungen (Chips) sein.

Gemäß der vorliegenden Erfindung ist eine erste Mehrleiterverbindung zur Übertragung der Nutzdaten vorgesehen, die einerseits mit dem Ein-/Ausgang des Basisbandbauteils und andererseits mit dem Ein-/Ausgang des Hochfrequenzbauteils verbunden ist, und bei der eine zweite Mehrleiterverbindung zur Übertragung der Konfigurationsdaten vorgesehen ist, die einerseits mit dem Ein-/Ausgang des Basisbandbauteils und andererseits mit dem Ein-/Ausgang des Hochfrequenzbauteils verbunden ist.

Die getrennte Datenübertragung von Nutz- und Konfigurationsdaten über die erste und zweite Mehrleiterverbindung vereinfacht und entflechtet den Aufbau der Signalverarbeitung im Basisbandbaustein, da üblicherweise die Nutzinformation von einem digitalen Signalprozessor im Basisbandbaustein und die Konfigurationsinformationen von einem Mikrocontroller im Basisbandbaustein unabhängig voneinander bereitgestellt werden und mit vorliegender Anordnung auch unabhängig voneinander über die digitale Schnittstelle übertragen werden.

Die Nutzdaten umfassen wie bereits beschrieben hauptsächlich die Modulationsdaten für den Hochfrequenzbaustein zur Modulation einer Trägerfrequenz, während die Konfigurationsdaten Informationen zum Konfigurieren des Hochfrequenzbauteils selbst, beispielsweise Sendefrequenz, Sendeamplitude, Sendeleistung und andere Sendeparameter umfassen.

Die getrennte, digitale Übertragung von Nutzdaten und Konfigurationsdaten erfolgt vorteilhafterweise mit telegrammorientierten oder paketorientierten Übertragungsprotokollen.

Für erste und zweite Mehrleiterverbindung können sowohl im Basisbandbauteil wie auch im Hochfrequenzbauteil jeweils getrennte, unabhängig voneinander vorgesehene Ein-/Ausgänge gebildet sein.

Beispielsweise kann der Basisbandbaustein einen ersten Ein-/Ausgang haben, der zur Übertragung der Nutzdaten mit dem digitalen Signalprozessor gekoppelt ist, während zur Übertragung der Konfigurationsdaten ein zweiter Ein-/Ausgang am Basisbandbauteil vorgesehen sein kann, der mit dem Mikrocontroller im Basisbandbauteil gekoppelt ist.

Das Hochfrequenzbauteil umfaßt bevorzugt einen Modulator, einen Digital/Analog-Wandler sowie Frequenzumsetzer zur Umsetzung eines Signals aus dem Basisband in ein hochfrequentes Signal. Zudem kann ein Leistungsverstärker vorgesehen sein, der an seinem Ausgang mit einer Antenne gekoppelt ist.

In der vorliegenden Erfindung umfaßt die erste digitale Mehrleiterverbindung
- eine Datenleitung ausgelegt zur seriellen Datenübertragung,
- eine Bittaktleitung zur Übermittlung eines Taktsignals, wobei je eine Taktperiode je einem zu übertragenden Bit der Datenleitung zugeordnet ist und
- eine Worttaktleitung zum Anzeigen des Übermittlungsbeginns einer Folge von Bits auf der Datenleitung.

Die über die Datenleitung zu übertragenden Daten können in Übertragungseinheiten, sogenannten Telegrammen, organisiert sein, welche jeweils beispielsweise seriell angeordnete 16 Bit umfassen. Ein Sendepuls (Burst) der Sendeschaltung wie - derum kann beispielsweise bei GSM eine Folge von insgesamt 11 Telegrammen mit je 16 Bit Länge umfassen.

Aufgrund der verhältnismäßig geringen zu übertragenden Datenmengen können vorteilhaft serielle digitale Übertragungsverfahren, insbesondere mit standardisierten Übertragungsprotokollen oder abgewandelten Übertragungsprotokollen wie I²S oder I²C verwendet werden.

In einer weiteren, bevorzugten Ausführungsform der vorliegenden Erfindung umfaßt die zweite digitale Mehrleiterverbindung eine Datenleitung ausgelegt zur seriellen Datenübertragung der Konfigurationsdaten, eine Bittaktleitung zur Übermittlung eines Taktsignals, wobei je eine Taktperiode je einem zu übertragenden Bit der Datenleitung zugeordnet ist und eine Selektionsleitung zum Aktivieren des Hochfrequenz-Bauteils oder einer Teilschaltung im Hochfrequenzbauteil.

Auch die Konfigurationsdaten können über eine als 3-Leiter-Schnittstelle ausgebildete, zweite digitale Mehrleiterverbindung übertragen werden, wobei das Übertragungsprotokoll bevorzugt in Telegrammen organisiert ist. Dabei kann es sich um Einzeltelegramme oder einen Verbund aus unmittelbar aufeinanderfolgenden Telegrammen handeln. Da bei vorliegendem Gegenstand die Nutzdatenübertragung vollständig unabhängig von der Konfigurationsdatenübertragung erfolgen kann, ist es ermöglicht, daß beispielsweise ein Mikrocontroller im Basisbandbaustein zu von ihm selbst bestimmten Zeitpunkten Sendeparameter an die Hochfrequenzbaugruppe überträgt, ohne daß der digitale Signalprozessor im Basisbandbaustein dadurch beeinflußt ist oder gar eine Nutzdatenübertragungs- oder Verarbeitungsunterbrechung erforderlich wäre. Hierdurch ist der zeitliche Ablauf und die Koordinierung desselben im Basisbandbauteil wesentlich vereinfacht.

Konfigurationsdaten bestimmen beispielsweise die Modulationsart, wie beispielsweise GMSK oder QAM, die Amplitude, den Sendeleistungsverlauf, die Sendefrequenz, den Sendezeitpunkt, die Sendedauer, die Senderbetriebsart, das Ein- und Ausschaltverhalten des Senders et cetera.

In einer weiteren, bevorzugten Ausführung der vorliegenden Erfindung ist eine Synchronisationsleitung zum Synchronisieren der Nutzdaten im Hochfrequenz-Bauteil vorgesehen, die einerseits mit dem Ein-/Ausgang des Basisband-Bauteils und andererseits mit dem Ein-/Ausgang des Hochfrequenzbauteils verbunden ist.

Mit der Synchronisationsleitung können Synchronisationsdaten übertragen werden, die den Zeitpunkt des jeweiligen Sendebeginns und -endes ausgangsseitig am Hochfrequenzbauteil, das heißt auf einer hochfrequenten Trägerebene, festlegen, beispielsweise beim Senden in Zeitschlitzen, sogenannten Bursts.

In einer weiteren, bevorzugten Ausführungsform der vorliegenden Erfindung sind die Ein- und Ausgänge von Hochfrequenz- und Basisbandbauteil für eine serielle Datenübertragung ausgelegt. Eine serielle Datenübertragung, im vorliegenden Fall eine serielle digitale Datenübertragung, ermöglicht vorteilhaft den Einsatz digitaler Übertragungsverfahren mit standardisierten Übertragungsprotokollen, wie beispielsweise I²S oder I²C aufgrund der vorliegenden, geringen zu übertragenden Datenmengen.

In einer weiteren, bevorzugten Ausführungsform der vorliegenden Erfindung sind die Ein-/Ausgänge von Basisband- und Hochfrequenz-Bauteil für eine unidirektionelle Datenübertragung vom Basisband- zum Hochfrequenz-Bauteil, nicht umgekehrt, ausgelegt. Hierdurch ist eine deutliche Reduzierung des Aufwands zur Realisierung der beschriebenen digitalen Schnittstelle erzielt.

In einer weiteren, bevorzugten Ausführungsform der vorliegenden Erfindung ist eine digitale Unterbrechungsanforderungsleitung zwischen Basisbandbauteil und Hochfrequenzbauteil angeschlossen, zum Veranlassen der Wiederaufnahme der Datenübertragung des Basisbandbauteils veranlaßt durch das Hochfrequenzbauteil.

In einer weiteren, bevorzugten Ausführungsform der vorliegenden Erfindung ist zwischen Basisband- und Hochfrequenzbauteil eine zusätzliche Steuerleitung zur Ansteuerung eines Leistungsverstärkers zum Verstärken des Hochfrequenz-Signals vorgesehen. Der Leistungsverstärker, englisch Power Amplifier, kann beispielsweise ausgangsseitig im Hochfrequenzbauteil vorgesehen sein und beispielsweise einen Frequenzumsetzer vom Basisband in eine hochfrequente Lage mit einer Antenne koppeln. Zum Ansteuern des Leistungsverstärkers, insbesondere dessen Ein- und Ausschaltverhaltens, englisch Power Ramping, kann je nach Anwendungsfall eine analoge gegenüber einer digitalen Ansteuerung des Leistungsverstärkers bevorzugt sein und einen geringeren schaltungstechnischen Aufwand bedeuten.

Weitere Einzelheiten der Erfindung sind Gegenstand der Unteransprüche.

Die Erfindung wird nachfolgend an einem Ausführungsbeispiel anhand der Zeichnungen näher erläutert.

Es zeigen:
- Figur 1: ein erstes Ausführungsbeispiel der vorliegenden Erfindung anhand eines vereinfachten Blockschaltbilds,
- Figur 2: beispielhafte Signalverläufe der 3-Leiter-Verbindung zur Übertragung der Nutzdaten über die Schnittstelle von Figur 1,
- Figur 3: beispielhafte Signalverläufe der Konfigurationsdaten zur Übertragung über die Schnittstelle von Figur 1 und
- Figur 4: anhand der Signalverläufe den Zusammenhang zwischen der Übertragung von Konfigurationsdaten, Nutzdaten und Synchronisationsdaten sowie den prinzipiellen Verlauf der Sendeleistung über die Schnittstelle gemäß Figur 1.

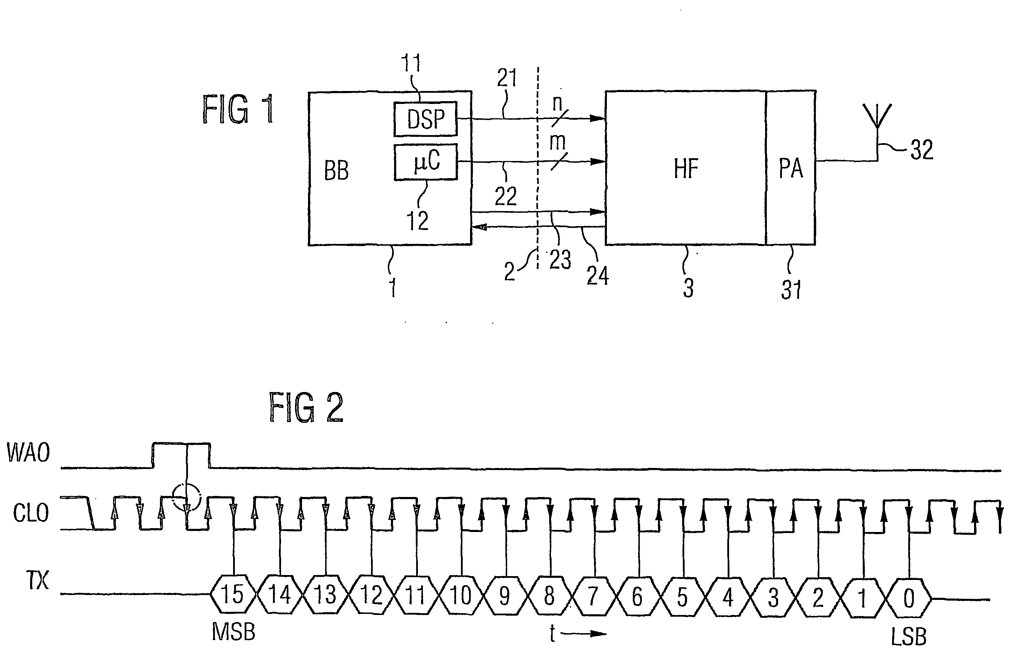

Figur 1 zeigt eine Sendeschaltung mit einem Basisbandbauteil 1 und daran über eine Schnittstelle 2 angeschlossenem Hochfrequenzbauteil 3. Das Basisbandbauteil 1 dient zur digitalen Verarbeitung zu sendender Nutzdaten und umfaßt einen digitalen Signalprozessor 11 zur Verarbeitung der Nutzdaten sowie einen Mikrocontroller 12 zur Steuerung des Hochfrequenzbauteils mittels der Konfigurationsdaten sowie insgesamt zur Ablaufsteuerung.

Das Hochfrequenzbauteil 3 umfaßt im vorliegenden Ausführungsbeispiel einen Leistungsverstärker 31, der in alternativen Ausführungsformen auch als externes Bauteil getrennt vom Hochfrequenzbaustein 3 vorgesehen sein kann. Ausgangsseitig am Leistungsverstärker 31 ist eine Antenne über eine Antennenleitung 32, welche zur Übertragung hochfrequenter modulierter Signale ausgelegt ist, angeschlossen.

Die Schnittstelle 2 zwischen Basisbandbauteil 1 und Hochfrequenzbauteil 3 umfaßt eine erste Mehrleiterverbindung 21, ausgelegt zur Übertragung der Nutzdaten, welche vom digitalen Signalprozessor 11 bereitgestellt sind, eine zweite digitale Mehrleiterverbindung 22, ausgelegt zur Übertragung von Konfigurationsdaten zur Steuerung des Hochfrequenzbauteils 3 und gekoppelt mit dem Mikrocontroller 12 im Basisbandbauteil 1, eine Synchronisationsleitung 23 zum Festlegen des Beginns und Endes von Sendezeitschlitzen im Sendesignal 32, sowie eine Unterbrechungsanforderungsleitung 24, eine sogenannte Interrupt-Leitung, mittels derer der Hochfrequenzbaustein 3 in die Lage versetzt ist, den Basisbandbaustein 1 zu einer neuen Aktion, insbesondere zur neuerlichen Übertragung von Daten, zu veranlassen.

Während die beiden Mehrleiterverbindungen 21, 22 sowie die Synchronisationsleitung 22 im vorliegenden Ausführungsbeispiel als unidirektionale Datenleitungen ausgelegt sind, das heißt zur Übertragung lediglich in Richtung vom Basisbandbauteil 1 zum Hochfrequenzbauteil 3, ist die Unterbrechungsanforderungsleitung 24 zur Übertragung in einer umgekehrten Signalrichtung vom Hochfrequenzbauteil 3 zum Basisbandbauteil 1 ausgelegt.

Da die Schnittstelle 2 eine ausschließlich digitale Schnittstelle ist, kann der Basisbaustein 1 vorteilhafterweise vollständig in digitaler Schaltungstechnik ausgeführt sein. Weiterhin ermöglicht die vollständige Trennung der jeweils digitalen Nutzdaten- von der Konfigurationsdatenübertragung einen deutlich vereinfachten Aufbau des Basisbandbauteils 1, da keine Verkopplung von vom digitalen Signalprozessor 11 und von vom Mikrocontroller 12 bereitgestellten Daten erfolgt. Zudem entfällt die bisher in Basisbandbausteinen übliche hybride, das heißt teilweise analoge und teilweise digitale, Schaltungstechnik.

Weiterhin umfaßt die Schnittstelle 2 lediglich 8 Leitungen, nämlich je drei Leitungen für die digitalen Mehrleiterverbindungen und je eine Leitung für Synchronisation und Unterbrechungsanforderung und ermöglicht somit eine geringe Pinanzahl der beteiligten Chips.

Figur 2 zeigt beispielhafte Signalverläufe der drei Leitungen Wortleitung WA0, Bittaktleitung CL0 und Datenleitung TX, welche von der ersten digitalen Mehrleiterverbindung 21 umfaßt sind. Diese erste digitale Mehrleiterverbindung 21 ist eine abgewandelte unidirektionale I²S-Schnittstelle, welche je eine Leitungsverbindung für den Worttakt, den Bittakt und die Datenübertragung WA0, CL0, TX umfaßt. Die serielle Übertragung der Daten über die Leitung TX erfolgt dabei in Telegrammen organisiert, wobei im vorliegenden Beispiel ein Telegramm aus 16 seriell angeordneten Bits besteht. Dabei wird das höchstwertige Bit (MSB, most significant bit) zuerst, das niederwertigste Bit (LSB, least significant bit) zuletzt übertragen. Das höchstwertige Bit dient im vorliegenden Fall zur Kennzeichnung, ob die 15 niederwertigeren Bits Nutzinformationen enthalten, das heißt Modulationsbits zum Modulieren einer Trägerschwingung im Hochfrequenzbauteil oder Kontrollinformationen, das heißt Daten zur Steuerung der seriellen Übertragung oder Art der seriellen Übertragung und das Transportformat der Nutzdaten, das heißt, ob es sich um Modulationsbits für Gaußsches Minimum-Shift-Keying, EDGE oder andere Modulationsarten handelt. Jeweils mit einer fallenden Taktflanke des periodischen Taktsignals CL0, des sogenannten Bittakts, wird je ein Modulationsbit der Datenleitung TX in das Hochfrequenzbauteil 3 hineingetaktet. Das Worttaktsignal WAO legt den Beginn der Übertragung eines Telegramms dadurch fest, daß zugleich mit einem Worttakt-Impuls eine fallende Taktflanke im Bittakt erfolgt. Die Datenübertragung beginnt dann mit der darauffolgenden abfallenden Taktflanke des Bittakts.

Im folgenden ist eine Tabelle 1 gezeigt, welche beispielhaft die Übertragung von 157 Modulationsbits eines vollständigen GSM-Sendepulses (Bursts) für GMSK-Modulation als Folge von insgesamt 11 Telegrammen mit je 16 Bit Länge umfaßt. Das MSB ist Null, demnach handelt es sich bei den übertragenen Bits um Nutzdaten, in diesem Fall Modulationsbits.

**Tabelle 1**

| Nr | Telegramm | | | | | | | | | | | | | | | | Inhalt |
|---|---|---|---|---|---|---|---|---|---|---|---|---|---|---|---|---|---|
| 1 | 0 | 14 | 13 | 12 | 11 | 10 | 9 | 8 | 7 | 6 | 5 | 4 | 3 | 2 | 1 | 0 | 0-14 |
| 2 | 0 | 29 | 28 | 27 | 26 | 25 | 24 | 23 | 22 | 21 | 20 | 19 | 18 | 17 | 16 | 15 | 15-29 |
| 3 | 0 | 44 | 43 | 42 | 41 | 40 | 39 | 38 | 37 | 36 | 35 | 34 | 33 | 32 | 31 | 30 | 30-44 |
| 4 | 0 | 59 | 58 | 57 | 56 | 55 | 54 | 53 | 52 | 51 | 50 | 49 | 48 | 47 | 46 | 45 | 45-59 |
| 5 | 0 | 74 | 73 | 72 | 71 | 70 | 69 | 68 | 67 | 66 | 65 | 64 | 63 | 62 | 61 | 60 | 60-74 |
| 6 | 0 | 89 | 88 | 87 | 86 | 85 | 84 | 83 | 82 | 81 | 80 | 79 | 78 | 77 | 76 | 75 | 75-89 |
| 7 | 0 | 104 | 103 | 102 | 101 | 100 | 99 | 98 | 97 | 96 | 95 | 94 | 93 | 92 | 91 | 90 | 90-114 |
| 8 | 0 | 119 | 118 | 117 | 116 | 115 | 114 | 113 | 112 | 111 | 110 | 109 | 108 | 107 | 106 | 105 | 105-119 |
| 9 | 0 | 134 | 133 | 132 | 131 | 130 | 129 | 128 | 127 | 126 | 125 | 124 | 123 | 122 | 121 | 120 | 120-134 |
| 10 | 0 | 149 | 148 | 147 | 146 | 145 | 144 | 143 | 142 | 141 | 140 | 139 | 138 | 137 | 136 | 135 | 135-149 |
| 11 | 0 | 0 | 0 | 0 | 0 | 0 | 0 | 0 | 0 | 156 | 155 | 154 | 153 | 152 | 151 | 150 | 150-156 |

Untenstehende Tabelle 2 zeigt beispielhaft die Übertragung von Kontrolldaten zur Steuerung der seriellen Übertragung über die Nutzdatenverbindung. Das MSB ist 1 und zeigt somit an, daß das Telegramm Kontrollinformationen enthält.

**Tabelle 2**

| Telegrammbezeichnung | Bit-Nummer | | | | | | | | | | | | | | | | Beschreibung |
|---|---|---|---|---|---|---|---|---|---|---|---|---|---|---|---|---|---|
| | 15 | 14 | 13 | 12 | 11 | 10 | 9 | 8 | 7 | 6 | 5 | 4 | 3 | 2 | 1 | 0 | |
| GMSK | 1 | 0 | 0 | 0 | 0 | 0 | 0 | 0 | 0 | 0 | 0 | 0 | 0 | 0 | 0 | 1 | Nach diesem Telegramm folgen 11 weitere mit Modulationsbits für einen GMSK Sendepuls gemäß Tab. 1 |
| EDGE | 1 | 0 | 0 | 0 | 0 | 0 | 0 | 0 | 0 | 0 | 0 | 0 | 0 | 0 | 1 | 0 | Nach diesem Telegramm folgen 32 weitere mit Modulationsbits für einen EDGE Sendepuls |
| Puffer leeren | 1 | 0 | 0 | 0 | 0 | 0 | 0 | 0 | 0 | 1 | 0 | 0 | 0 | 0 | 0 | 0 | Bisher übertragene Daten sind ungültig, Eingangspuffer leeren |
| IRQ leer | 1 | 0 | 0 | 0 | 0 | 0 | 0 | 0 | 1 | 0 | x | x | x | x | x | x | Unterbrechungsanforderung (IRQ) auslösen, wenn nur mehr xxxxxx_{B} unverarbeitete Telegramme im Eingangspuffer sind |
| IRQ voll | 1 | 0 | 0 | 0 | 0 | 0 | 0 | 0 | 1 | 1 | x | x | x | x | x | x | Unterbrechungsanforderung (IRQ) auslösen, wenn nur mehr Platz für xxxxxx_{B} Telegramme im Eingangspuffer ist |

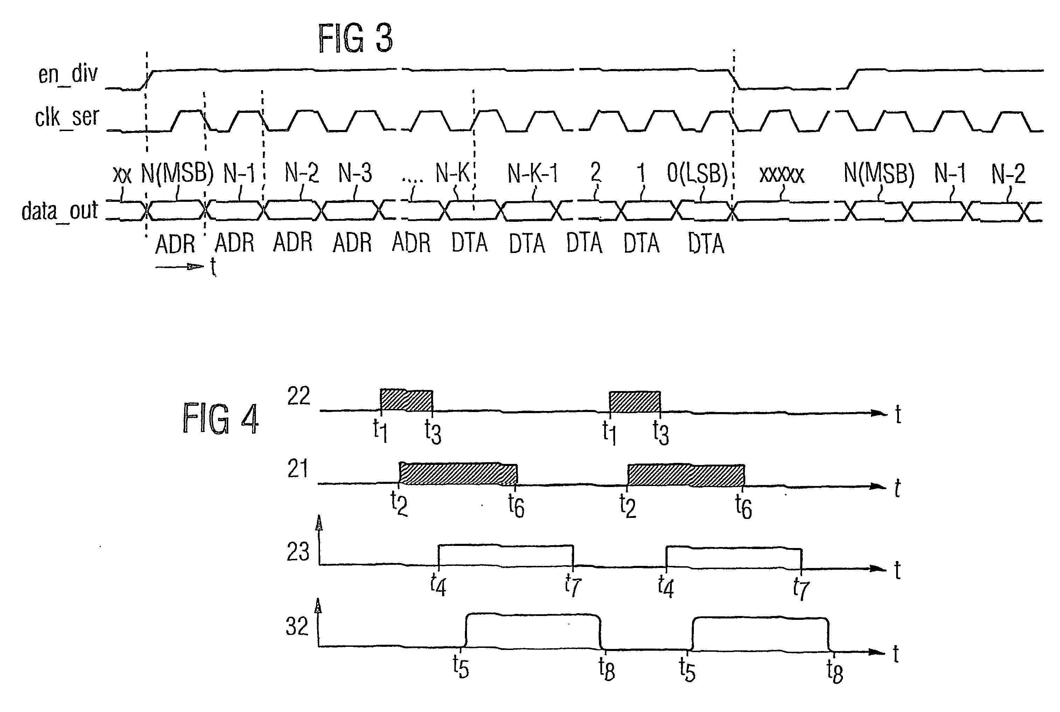

Figur 3 zeigt den zeitlichen Verlauf der Signale über die insgesamt 3 Leitungen der zweiten digitalen Mehrleiterverbindung 22 aus Figur 1 an einem Beispiel. Auch die zweite digitale Mehrleiterverbindung 22 ist zur seriellen Datenübertragung über die Leitung data_out ausgelegt und umfaßt zusätzlich eine Leitung für den Bittakt clk_ser, wie bereits in Figur 2 beschrieben, sowie eine dritte Leitung en_div für die Bausteinselektion, mit der der Konfigurationsdaten empfangende Baustein 3 oder eine Teilschaltung desselben aktivierbar ist. Auch das Übertragungsprotokoll der Konfigurationsdaten über die Leitung 22 erfolgt telegrammorganisiert, wobei die Telegramme entweder Einzeltelegramme oder ein Verbund aus unmittelbar aufeinanderfolgenden Telegrammen sein können. Ein Telegramm besteht dabei aus einer definierten Anzahl von N+1 Bits, beispielsweise 24 Bit, und setzt sich zusammen aus einem Adreßteil und einem Datenteil. Der Adreßteil umfaßt dabei K Bits und ist mit ADR bezeichnet, während der Datenteil mit DTA bezeichnet ist und N-K+1 Bit umfaßt. Bei einem Telegrammverbund, welcher Daten zu aufeinanderfolgenden Adressen sendet, kann der Adreßteil entfallen, falls die Anfangsadresse dem Empfänger bekannt ist. Als Empfänger ist dabei der Hochfrequenzbaustein 3 verstanden, der hier Konfigurationsdaten empfängt, aber Hochfrequenzdaten über eine Antenne sendet. Die Adresse bestimmt dann den Zielort, beispielsweise einen Funktionsblock, an den die Daten im Hochfrequenzbaustein 3 übertragen werden sollen.

Wie anhand der Figuren 2 und 3 in der Zusammenschau mit Figur 1 deutlich wird, kann der Mikrocontroller 12 zu von ihm selbst festgelegten Zeitpunkten unabhängig von einer Nutzdatenübertragung Sendeparameter an den Hochfrequenzbaustein 3 übertragen, ohne daß hierdurch der digitale Signalprozessor 11 beeinflußt oder gar dessen Verarbeitung oder Übertragung von Nutzdaten unterbrochen werden muß, wodurch sich insgesamt eine wesentliche Vereinfachung des zeitlichen Ablaufs und der Ablaufsteuerung im Basisbandbaustein 1 ergibt.

Über die zweite Mehrleiterverbindung 22 werden Konfigurationsdaten wie beispielsweise Modulationsart, Amplitude, Sendeleistungsverlauf, Sendefrequenz, Sendezeitpunkt, Sendedauer, Senderbetriebsart, Ein- und Ausschaltverhalten des Senders et cetera übertragen.

Für die Übertragung eines Telegrammverbunds kann ein spezielles Konfigurationstelegramm eingesetzt werden, welches vor Beginn des Telegrammverbunds den Beginn, die Länge und die Start-Zieladresse des Verbunds festlegt. Ein Telegrammverbund dient beispielsweise dazu, die Grundkonfiguration des Senders zeiteffizient einzustellen.

Bei der Übertragung von Einzeltelegrammen bestimmt der Zeitpunkt der Telegrammübertragung üblicherweise auch den Zeitpunkt des Wirksamwerdens der neuen Einstellung.

Optional können durch Implementierung einer zusätzlichen Verbindungsleitung, welche in Figur 3 nicht dargestellt ist, auch Daten vom Hochfrequenzteil zum Basisbandteil übertragen werden, welche zuvor über ein spezielles Anforderungstelegramm vom Basisbandteil angefordert wurden. Dieses Anforderungstelegramm kann beispielsweise dadurch gekennzeichnet sein, daß ein Bit im Adreßteil zur Anzeige dient, daß auf die Adresse nicht schreibend, sondern lesend zugegriffen werden soll.

Figur 4 schließlich veranschaulicht den Zusammenhang zwischen der Übertragung von Nutzdaten, Konfigurationsdaten und Synchronisationsdaten sowie den prinzipiellen Verlauf der Sendeleistung eines GSM-konformen Sendesignals 32 von Figur 1. Die Nutzdaten werden dabei über die erste Mehrleiterverbindung 21, die Konfigurationsdaten über die zweite digitale Mehrleiterverbindung 22 und die Synchronisationsdaten über die Synchronisationsleitung 23 gemäß Figur 1 übertragen.

Zunächst wird sichergestellt, daß alle für das Senden des Hochfrequenzbauteils über eine Antenne erforderlichen Konfigurationsdaten über die zweite digitale Mehrleiterverbindung 22 an die Hochfrequenzbaugruppe 3 übertragen wurden und auch ausreichend viele Modulationsbits über die erste digitale Mehrleiterverbindung 21 in einen Eingangspuffer der Hochfrequenzbaugruppe 3 geschrieben wurden. Über die Synchronisationsleitung 3 kann anschließend dem Modulator im Hochfrequenzbauteil 3 ein Startsignal gegeben werden, um mit der Modulation und dem Senden zu beginnen. Beispielsweise kennzeichnet eine ansteigende Flanke einen Sendebeginn und eine abfallende Flanke ein Ende eines Sendezeitschlitzes (Burst). Insgesamt bezeichnen die Zeitpunkt t1 bis t8 folgende, signifikanten Zeitpunkte der Synchronisation des Senders:
- t1: Beginn der Übertragung von Konfigurationsinformation,
- t2: Beginn der Übertragung von Nutzinformation,
- t3: Ende der Übertragung von Konfigurationsinformation,
- t4: Start des Modulators,
- t5: Beginn der Aufwärts-Leistungsrampe,
- t6: Ende der Übertragung von Nutzinformation,
- t7: Einleiten des Sendeimpulsendes,
- t8: Ende der Abwärts-Leistungsrampe.

### Bezugszeichenliste

- 1: Basisbandbauteil
- 2: Schnittstelle
- 3: Hochfrequenzbauteil
- 11: Digitaler Signalprozessor
- 12: Mikrocontroller
- 21: Mehrleiterverbindung
- 22: Mehrleiterverbindung
- 23: Synchronisationsleitung
- 24: Unterbrechungsanforderungsleitung
- CL0: Bittakt
- WAO: Worttakt
- TX: Daten
- en_div: Auswahlleitung
- clk_ser: Bittakt
- data_out: Daten
- MSB: Most significant bit
- LSB: Least significant bit

## Patentansprüche

1. Sendeanordnung, insbesondere für den Mobilfunk, aufweisend
- ein Basisbandbauteil (1) zum Verarbeiten eines Basisbandsignals mit einem zur digitalen Datenübertragung ausgebildeten Ein-/Ausgang,
- ein Hochfrequenzbauteil (3) zum Umsetzen des Basisbandsignals in ein zu sendendes Hochfrequenzsignal, mit einem zur digitalen Datenübertragung ausgebildeten Ein-/Ausgang, der mit dem Ein-/Ausgang des Basisbandbauteils zur digitalen Übertragung von zu sendenden Nutzdaten und von Konfigurationsdaten zum Konfigurieren des Hochfrequenzbauteils mittels einer Schnittstelle (2) gekoppelt ist,
- eine erste digitale Mehrleiterverbindung (21) zur Übertragung der Nutzdaten, die einerseits mit dem Ein-/Ausgang des Basisbandbauteils (1) und andererseits mit dem Ein-/Ausgang des Hochfrequenzbauteils (3) verbunden ist, und
- eine zweite digitale Mehrleiterverbindung (22) zur Übertragung der Konfigurationsdaten, die einerseits mit dem Ein-/Ausgang des Basisbandbauteils (1) und andererseits mit dem Ein-/Ausgang des Hochfrequenzbauteils (3) verbunden ist,
**dadurch gekennzeichnet, daß**
die erste digitale Mehrleiterverbindung (21)
- eine Datenleitung ausgelegt zur seriellen Datenübertragung der Nutzdaten (TX),
- eine Bittaktleitung ausgelegt zur Übermittlung eines Taktsignals (CLO), wobei je eine Taktperiode je einem Bit der Datenleitung zugeordnet ist, und
- eine Worttaktleitung ausgelegt zum Anzeigen des Übermittlungsbeginns einer Folge von Bits auf der Datenleitung (WAO)
umfaßt.

2. Sendeanordnung nach Anspruch 1,
**dadurch gekennzeichnet, daß**
die zweite digitale Mehrleiterverbindung (22)
- eine Datenleitung ausgelegt zur seriellen Datenübertragung der Konfigurationsdaten (data_out),
- eine Bittaktleitung ausgelegt zur Übermittlung eines Taktsignals (clk_ser), wobei je eine Taktperiode je einem Bit der Datenleitung zugeordnet ist, und
- eine Selektionsleitung zum Aktivieren des Hochfrequenzbauteils (en_div)
umfaßt.

3. Sendeanordnung nach Anspruch 1 oder 2,
**dadurch gekennzeichnet, daß**
eine Synchronisationsleitung (23) zum Synchronisieren der Nutzdaten im Hochfrequenzbauteil (3) vorgesehen ist, die einerseits mit dem Ein-/Ausgang des Basisbandbauteils (1) und andererseits mit dem Ein-/Ausgang des Hochfrequenzbauteils (3) verbunden ist.

4. Sendeanordnung nach einem der Ansprüche 1 bis 3,
**dadurch gekennzeichnet, daß**
die Ein-/Ausgänge von Basisband- und Hochfrequenzbauteil (1, 3) für eine serielle Datenübertragung ausgelegt sind.

5. Sendeanordnung nach einem der Ansprüche 1 bis 4,
**dadurch gekennzeichnet, daß**
die Ein-/Ausgänge von Basisband- und Hochfrequenzbauteil (1, 3) für eine unidirektionale Datenübertragung vom Basisbandbauteil (1) zum Hochfrequenzbauteil (3) ausgelegt sind.

6. Sendeanordnung nach einem der Ansprüche 1 bis 5,
**dadurch gekennzeichnet, daß**
eine digitale Unterbrechungsanforderungsleitung (24) vorgesehen ist, die zwischen Basisbandbauteil (1) und Hochfrequenzbauteil (3) angeschlossen ist, insbesondere zum Veranlassen der Wiederaufnahme der Datenübertragung des Basisbandbauteils (1) durch das Hochfrequenzbauteil (3).

7. Sendeanordnung nach einem der Ansprüche 1 bis 6,
**dadurch gekennzeichnet, daß**
zwischen Basisbandbauteil (1) und Hochfrequenzbauteil (3) eine Steuerleitung zum Ansteuern eines Leistungsverstärkers zur Verstärkung des Hochfrequenzsignals vorgesehen ist.

8. Verwendung einer Sendeanordnung nach einem der Ansprüche 1 bis 7
in einer Mobilstation zur Kommunikation mit einer Basisstation.

## Claims

1. Transmission arrangement, in particular for mobile radio, having
- a baseband component (1) for processing a baseband signal and having an input/output which is designed for digital data transmission,
- a radio-frequency component (3) for conversion of the baseband signal to a radio-frequency signal to be transmitted, having an input/output which is designed for digital data transmission and is coupled by means of an interface (2) to the input/output of the baseband component for digital transmission of payload data to be transmitted and of configuration data for configuration of the radio-frequency component,
- a first digital multiple conductor connection (21) for transmission of the payload data, which is connected at one end to the input/output of the baseband component (1) and is connected at the other end to the input/output of the radio-frequency component (3), and
- a second digital multiple conductor connection (22) for transmission of the configuration data, which is connected at one end to the input/output of the baseband component (1) and is connected at the other end to the input/output of the radio-frequency component (3),
**characterised in that** the first digital multiple conductor connection (21) comprises
- a data line designed for serial data transmission of payload data (TX),
- a bit clock line designed for transmission of a clock signal (CL0), with in each case one bit of the data line being associated with in each case one clock period, and
- a word clock line designed for indication of the start of transmission of a sequence of bits on the data line (WA0).

2. Transmission arrangement according to claim 1,
**characterized in that**
the second digital multiple conductor connection (22) comprises
- a data line designed for serial data transmission of the configuration data (data_out),
- a bit clock line designed for transmission of a clock signal (clk_ser), with in each case one clock period being associated with in each case one bit on the data line, and
- a selection line for activation of the radio-frequency component (en_div).

3. Transmission arrangement according to Claim 1 or 2,
**characterized in that**
a synchronisation line (23) is provided for synchronisation of the payload data in the radio-frequency component (3), is connected at one end to the input/output of the baseband component (1), and is connected at the other end to the input/output of the radio-frequency component (3).

4. Transmission arrangement according to Claim 1 to 3,
**characterized in that**
the inputs/outputs of the baseband and radio-frequency components (1, 3) are designed for serial data transmission.

5. Transmission arrangement according to one of Claims 1 to 4,
**characterized in that**
the inputs/outputs of the baseband and radio-frequency components (1, 3) are designed for unidirectional data transmission from the baseband component (1) to the radio-frequency component (3).

6. The transmission arrangement as claimed in one of Claims 1 to 5,
**characterized in that**
a digital interrupt request line (24) is provided and is connected between the baseband component (1) and the radio-frequency component (3), in particular for initiating resumption of the data transmission of the baseband component (1) through the radio-frequency component (3).

7. Transmission arrangement according to one of Claims 1 to 6,
**characterized in that**
a control line for driving a power amplifier for amplification of the radio-frequency signal is provided between the baseband component (1) and the radio-frequency component (3).

8. Use of a transmission arrangement as claimed in one of Claims 1 to 7,
in a mobile station for communication with a base station.

## Revendications

1. Dispositif d'émission, notamment pour la téléphonie mobile, comprenant
- un composant (1) de bande de base pour traiter un signal de bande de base ayant une entrée/sortie constituée pour la transmission numérique de données,
- un composant (3) de haute fréquence pour convertir le signal de bande de base en un signal de haute fréquence à émettre, ayant une entrée/sortie constituée pour la transmission numérique de données et couplée à l'entrée/sortie du composant de bande de base pour la transmission numérique de données utiles à émettre et de données de configuration pour configurer le composant de haute fréquence au moyen d'une interface (2),
- une première liaison (21) numérique à conducteurs multiples pour la transmission des données utiles qui est reliée, d'une part, à l'entrée/sortie du composant (1) de bande de base et, d'autre part, à l'entrée/sortie du composant (3) de haute fréquence et
- une deuxième liaison (22) numérique à conducteurs multiples pour la transmission des données de configuration qui est reliée, d'une part, à l'entrée/sortie du composant (1) de bande de base et, d'autre part, à l'entrée/sortie du composant (3) de haute fréquence,
**caractérisé en ce que**
la première liaison (21) numérique à conducteurs multiples comprend
- une ligne de données conçue pour la transmission séquentielle des données (TX) utiles,
- une ligne d'horloge de bit conçue pour la transmission d'un signal (CL0) d'horloge, respectivement une période d'horloge étant associée à un bit de la ligne de données et
- une ligne d'horloge de mot conçue pour indiquer le début de la transmission d'une suite de bits sur la ligne (WAO) de données.

2. Dispositif d'émission suivant la revendication 1,
**caractérisé en ce que**
la deuxième liaison (22) numérique à conducteurs multiples comprend
- une ligne de données conçue pour la transmission séquentielle des données (data_out) de configuration,
- une ligne d'horloge de bit conçue pour la transmission d'un signal (clk_ser) d'horloge, une période d'horloge étant associée respectivement à un bit de la ligne de données, et
- une ligne de sélection pour activer le composant (en_div) de haute fréquence.

3. Dispositif d'émission suivant la revendication 1 ou 2,
**caractérisé**
**en ce qu'**il est prévu une ligne (23) de synchronisation pour synchroniser les données utiles dans le composant (3) de haute fréquence qui est reliée, d'une part, à l'entrée/sortie du composant (1) de bande de base et, d'autre part, à l'entrée/sortie du composant (3) de haute fréquence.

4. Dispositif d'émission suivant l'une des revendications 1 à 3,
**caractérisé en ce que**
les entrées/sorties des composants (1, 3) de bande de base et de haute fréquence sont conçues pour une transmission séquentielle de données.

5. Dispositif d'émission suivant l'une des revendications 1 à 4,
**caractérisé en ce que**
les entrées/sorties des composants (1, 3) de bande de base et de haute fréquence sont conçues pour une transmission unidirectionnelle de données du composant (1) de bande de base au composant (3) de haute fréquence.

6. Dispositif d'émission suivant l'une des revendications 1 à 5,
**caractérisé**
**en ce qu'**il est prévu une ligne (24) numérique de demande d'interruption qui est raccordée entre le composant (1) de bande de base et le composant (3) de haute fréquence, notamment pour provoquer la reprise de la transmission de données du composant (1) de bande de base par le composant (3) de haute fréquence.

7. Dispositif d'émission suivant l'une des revendications 1 à 6,
**caractérisé**
**en ce qu'**il est prévu entre le composant (1) de bande de base et le composant (3) de haute fréquence une ligne de commande pour commander un amplificateur de puissance pour amplifier le signal de haute fréquence.

8. Utilisation d'un dispositif d'émission suivant l'une des revendications 1 à 7 dans une station mobile de communication avec une station de base.
